# EUROPÄISCHE PATENTSCHRIFT

(11) **EP 4 137 384 B1**
(45) Veröffentlichungstag und Bekanntmachung des Hinweises auf die Patenterteilung: **10.12.2025**
(21) Anmeldenummer: 22178380.6
(22) Anmeldetag: 10.06.2022
(51) Int. Cl.: B62D 5/00, B62D 15/02

(54) **STEER-BY-WIRE-LENKSYSTEM UND VERFAHREN ZUM BETREIBEN EINES STEER-BY-WIRE-LENKSYSTEMS**
STEER-BY-WIRE STEERING SYSTEM FOR A VEHICLE AND METHOD FOR OPERATING A STEER-BY-WIRE STEERING SYSTEM
SYSTÈME DE DIRECTION À COMMANDE PAR CÂBLE ET PROCÉDÉ PERMETTANT DE FAIRE FONCTIONNER UN SYSTÈME DE DIRECTION À COMMANDE PAR CÂBLE

(30) Priorität: 18.08.2021 DE 102021209078
(43) Veröffentlichungstag der Anmeldung: 22.02.2023
(73) Patentinhaber: VOLKSWAGEN AG, 38440 Wolfsburg (DE)
(72) Erfinder: Dreyer, Dirk, 31655 Stadthagen (DE)

(56) Entgegenhaltungen:
- EP-A1- 3 725 644
- DE-A1- 102017 215 593
- DE-A1- 102018 200 327

## Beschreibung

Die Erfindung betrifft ein Steer-by-Wire-Lenksystem sowie ein Verfahren zum Betreiben eines Steer-by-Wire-Lenksystems.

Ein Steer-by-Wire-Lenksystem umfasst typischerweise eine Lenkhandhabe, ein Lenksäulenmodul und ein Lenkgetriebe, wobei das Lenksäulenmodul und das Lenkgetriebe datentechnisch verbunden, aber mechanisch entkoppelt sind, wobei in dem Lenksäulenmodul ein Drehwinkelsensor und ein Aktor zur Erzeugung eines Gegenmoments an der Lenkhandhabe angeordnet ist. Der Aktor ist beispielsweise ein elektrischer Servomotor. Dabei kann vorgesehen sein, dass der Aktor seine Ansteuersignale vom Lenkgetriebe bekommt oder aber auch direkt aus dem Lenksäulenmodul, wobei das Gegenmoment beispielsweise in Abhängigkeit des Drehwinkels und der Fahrzeuggeschwindigkeit erzeugt wird. Ein solches Steer-by-Wire-Lenksystem ist aus der US 10,906,581 B2 bekannt.

Bei modernen Kraftfahrzeugen, wo ein Fahrerassistenz-System eine Lenkaufgabe vollständig oder nahezu vollständig übernimmt, gibt das Fahrerassistenz-System die Trajektorie vor, die dann von einem Lenkwinkelregler umgesetzt wird. Als Eingangsgröße erhält dann der Lenkwinkelregler einen Soll-Lenkwinkel und führt den Ist-Lenkwinkel bestmöglich nach. Ein solcher Lenkwinkelregler ist beispielsweise aus der DE 10 2017 214 380 A1 bekannt.

Beim assistierten Fahren behält hingegen der Fahrer primär die Hoheit über die Fahraufgabe, wobei das Fahrerassistenz-System Zusatz-Lenkmomente generiert, die vom Lenkgetriebe umgesetzt werden. Aufgrund der mechanischen Entkopplung ist die Abstimmung dabei nicht einfach, da ein Positionsregler im Lenkgetriebe zwischen den Vorgaben des Fahrers und dem Fahrerassistenz-System priorisieren muss.

Aus der EP 3 725 644 A1 ist ein Steer-by-Wire-Lenksystem bekannt, umfassend eine Lenkhandhabe, ein Lenksäulenmodul und ein Lenkgetriebe, wobei das Lenksäulenmodul und das Lenkgetriebe datentechnisch verbunden sind. In dem Lenksäulenmodul sind ein Drehwinkelsensor und ein Aktor zur Erzeugung eines Gegenmomentes an der Lenkhandhabe angeordnet. Weiter ist in dem Lenksäulenmodul ein Lenkwinkelregler angeordnet, wobei der Lenkwinkelregler datentechnisch mit mindestens einem Fahrerassistenzsystem verbunden ist, mittels dessen fahrerautonome Lenkbewegungen vorgegeben werden. Der Lenkwinkelregler ist derart ausgebildet, von dem mindestens einem Fahrerassistenzsystem einen Sollwinkel zu empfangen und über den Aktor ein Drehmoment zur Einstellung des Sollwinkels zu erzeugen.

Aus der DE 10 2018 200 327 A1 ist ein Verfahren zum Einstellen des Unterstützungsgrades eines Fahrerassistenzsystems in einem Fahrzeug bekannt, das autonom in eine die Fahrdynamik beeinflussende Fahrzeugeinheit eingreifen kann, wobei ein Fahrereingriff zu einem Übersteuern eines autonomen, vom Fahrerassistenzsystem durchgeführten Eingriffs führt, falls die Betätigungsintensität des Fahrereingriffs einen einstellbaren Betätigungsgrenzwert überschreitet, wobei der Betätigungsgrenzwert als Funktion des Verhältnisses zwischen dem Fahrzustand und der Güte der einem Eingriff des Fahrerassistenzsystems zugrundeliegende Information eingestellt wird.

Aus der DE 10 2017 215 593 A1 ist ein Steer-by-Wire-System bekannt, umfassend eine Lenkhandhabe, einen Sensor zur Erfassung eines Fahrerwunsches, mindestens ein Lenkungssteuergerät, eine Leistungselektronik, einen elektronischen Servomotor, eine über den Servomotor bewegbare Zahnstange und einen Aktor zur Erzeugung eines Rückkopplungsmoments an der Lenkhandhabe in Abhängigkeit von einer Zahnstangenposition, wobei das Lenkungssteuergerät derart ausgebildet ist, von einem aufgrund der Daten des Sensors ermittelten Fahrerwunsch mindestens einen Anteil aufgrund des Rückkopplungsmoments abzuziehen.

Der Erfindung liegt das technische Problem zugrunde, ein Steer-by-Wire-Lenksystem zu schaffen, mit dem verbessert Lenkmoment-Empfehlungen für ein assistiertes Fahren umgesetzt werden können. Ein weiteres technisches Problem ist, ein geeignetes Verfahren zum Betreiben eines Steer-by-Wire-Lenksystems zur Verfügung zu stellen.

Die Lösung des technischen Problems ergibt sich durch ein Steer-by-Wire-Lenksystem mit den Merkmalen des Anspruchs 1 sowie ein Verfahren zum Betreiben eines Steer-by-Wire-Lenksystems mit den Merkmalen des Anspruchs 6. Weitere vorteilhafte Ausgestaltungen der Erfindung ergeben sich aus den Unteransprüchen.

Hierzu umfasst das Steer-by-Wire-Lenksystem eine Lenkhandhabe, ein Lenksäulenmodul und ein Lenkgetriebe, wobei das Lenksäulenmodul und das Lenkgetriebe datentechnisch verbunden sind. In dem Lenksäulenmodul ist mindestens ein Drehwinkelsensor, ein Aktor zur Erzeugung eines Gegenmoments an der Lenkhandhabe und ein Lenkwinkelregler angeordnet, wobei der Lenkwinkelregler datentechnisch mit mindestens einem Fahrerassistenzsystem verbunden ist. Der Lenkwinkelregler ist derart ausgebildet, von dem mindestens einen Fahrerassistenzsystem einen Sollwinkel zu empfangen und über den Aktor oder einen weiteren Aktor ein Drehmoment zur Einstellung des Sollwinkels zu erzeugen. Hierdurch wird die Abstimmung erheblich vereinfacht, da das Lenkgetriebe nur ein Signal vom Lenksäulenmodul erhält, nämlich das des Drehwinkelsensors. Der Kraftfahrzeugführer spürt das zusätzliche Moment an der Lenkhandhabe und kann dann durch sein Handmoment bestimmen, ob dieser der Empfehlung folgt oder diese durch mehr Handmoment kompensiert bzw. ignoriert.

In einer Ausführungsform ist der Lenkwinkelregler derart ausgebildet, dass der Lenkwinkelregler ein betragsmäßig begrenztes Drehmoment mittels des Aktors erzeugt, das von einem Kraftfahrzeugführer überlenkt werden kann. Dadurch wird sichergestellt, dass der Kraftfahrzeugführer die Lenkmomentempfehlung des Fahrerassistenzsystems jederzeit ignorieren kann, indem er gegenlenkt. Das Drehmoment ist beispielsweise auf 1 bis 2 Nm begrenzt.

In einer weiteren Ausführungsform ist der Lenkwinkelregler mit dem mindestens einen Fahrerassistenzsystem über ein Bussystem verbunden. Insbesondere bei Ausführungsformen, wo mehrere Fahrerassistenzsysteme Lenkmomentempfehlungen erzeugen können, vereinfacht dies den Datentransfer.

In einer weiteren Ausführungsform ist in dem Lenksäulenmodul ein Steuergerät angeordnet, das derart ausgebildet ist, den Aktor anzusteuern. Dabei kann das Steuergerät Steuersignale von einem Steuergerät des Lenkgetriebes bekommen oder aber vom Drehwinkelsensor im Lenksäulenmodul direkt, wobei dann das Gegenmoment noch zusätzlich in Abhängigkeit von der Fahrzeuggeschwindigkeit erzeugt wird.

In einer weiteren Ausführungsform ist das Steer-by-Wire-Lenksystem derart ausgebildet, dass die betragsmäßige Begrenzung durch eine Nutzereingabe und/oder das mindestens eine Fahrerassistenzsystem veränderbar ist. Dies erlaubt dem Nutzer, innerhalb vorgegebener Grenzen das Lenkgefühl nutzerindividuell einzustellen und/oder dem Fahrerassistenzsystem entsprechend einer Priorisierung einzelnen Lenkmomentempfehlungen mehr Nachdruck zu verleihen, da die Spürbarkeit an der Lenkhandhabe vergrößert wird.

Hinsichtlich der verfahrensmäßigen Ausgestaltung wird vollinhaltlich auf die vorangegangenen Ausführungen Bezug genommen.

Die Erfindung wird nachfolgend anhand eines bevorzugten Ausführungsbeispiels näher erläutert. Die einzige Figur zeigt ein schematisches Blockschaltbild eines Steer-by-Wire-Lenksystems.

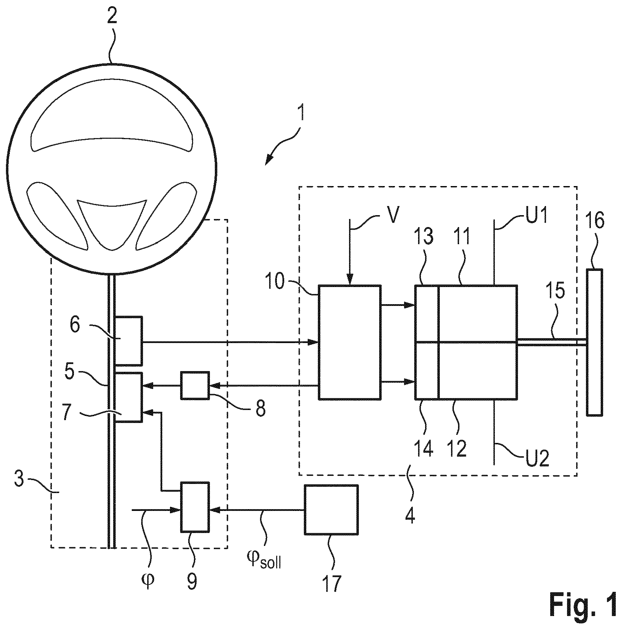

Das in Fig. 1 dargestellte Steer-by-Wire-Lenksystem 1 umfasst eine Lenkhandhabe 2, ein Lenksäulenmodul 3 und ein Lenkgetriebe 4. Die Lenkhandhabe 2 ist mechanisch mit einer Lenksäule 5 verbunden. In dem Lenksäulenmodul 3 sind weiter mindestens ein Drehwinkelsensor 6, ein Aktor 7, ein Steuergerät 8 und ein Lenkwinkelregler 9 angeordnet. Das Lenkgetriebe 4 umfasst ein Steuergerät 10 sowie zwei Halbmotoren 11, 12, die jeweils eine eigene Leistungselektronik 13, 14 aufweisen. Die beiden Halbmotoren 11, 12 arbeiten auf einen gemeinsamen Rotor 15, der über ein nicht dargestelltes Getriebe mit einer Zahnstange 16 gekoppelt ist. Die Halbmotoren 11, 12 sowie deren jeweilige Leistungselektronik 13, 14 werden jeweils von einer unabhängigen Spannungsversorgung U1, U2 mit Energie versorgt.

Die Funktionsweise des Steer-by-Wire-Lenksystems 1 ist nun wie folgt. Dreht der Kraftfahrzeugführer an der Lenkhandhabe 2, so wird der eingestellte Lenkradwinkel φ vom Drehwinkelsensor 6 gemessen und an das Steuergerät 10 übermittelt. Das Steuergerät 10 ermittelt dann eine Zahnstangenkraft, die über das nicht dargestellte Getriebe auf die Zahnstange 16 aufgebracht werden soll und übermittelt Steuersignale für die beiden Leistungselektroniken 13, 14. Dabei berücksichtigt das Steuergerät 10 mindestens zusätzlich noch die Fahrzeuggeschwindigkeit V. Durch die Aufteilung in zwei Leistungselektroniken 13, 14 und zwei Halbmotoren 11, 12 ist das Lenkgetriebe 4 ausfallsicher.

Das Steuergerät 10 übermittelt parallel ein Signal an das Steuergerät 8, damit dieses den Aktor 7 ansteuert, der dann ein haptisches Gegenmoment an der Lenksäule 5 erzeugt, das an der Lenkhandhabe 2 spürbar ist. Der Aktor 7 ist beispielsweise als Elektromotor ausgebildet und wird auch als Force-Feedback-Aktor bezeichnet.

Möchte nun ein Fahrerassistenzsystem 17 eine Lenkmomentempfehlung für den Kraftfahrzeugführer erzeugen, so überträgt diese einen Sollwinkel φₛₒₗₗ an den Lenkwinkelregler 9, wobei das Fahrerassistenzsystem 17 den aktuellen Ist-Winkel φ beispielsweise von dem Steuergerät 10 übermittelt bekommen hat. Der Lenkwinkelregler 9 ist mit dem Aktor 7 verbunden und erzeugt ein zusätzliches Drehmoment, um den Sollwinkel φₛₒₗₗ einzustellen, wobei der Ist-Winkel φ zum Lenkwinkelregler 9 zurückgeführt wird. Dabei ist der Betrag des Drehmoments derart beschränkt, dass dieses jederzeit vom Kraftfahrzeugführer überlenkt werden kann, der Kraftfahrzeugführer aber das Drehmoment spürt. Möchte dann der Kraftfahrzeugführer der Lenkmomentempfehlung folgen, so braucht er nur kein entgegenwirkendes Handmoment zu erzeugen. Als Folge ändert sich der Drehwinkel φ (bzw. Ist-Winkel). Dieser geänderte Drehwinkel wird an das Steuergerät 10 übertragen und vom Lenkgetriebe 4 umgesetzt. Überlenkt hingegen der Kraftfahrzeugführer das Drehmoment durch ein entsprechendes Handmoment, so folgt die Lenkung nur der Lenkvorgabe des Kraftfahrzeugführers.

Dabei kann über eine nicht dargestellte Bedieneinheit der Nutzer den Betrag des Drehmoments einstellen. Anschaulich bedeutet dies, wie spürbar möchte der Nutzer die Lenkempfehlung haben. Dabei können Grenzen vorgegeben werden, innerhalb derer der Nutzer das betragsmäßig maximale Drehmoment festlegen kann. Alternativ kann auch das Fahrerassistenzsystem 17 den maximalen Betrag variieren. Hierzu wird dann der Lenkwinkelregler 9 eingestellt, um ein größeres Drehmoment zur Verfügung zu stellen.

### Bezugszeichenliste

- 1: Steer-by-Wire-Lenksystem
- 2: Lenkhandhabe
- 3: Lenksäulenmodul
- 4: Lenkgetriebe
- 5: Lenksäule
- 6: Drehwinkelsensor
- 7: Aktor
- 8: Steuergerät
- 9: Lenkwinkelregler
- 10: Steuergerät
- 11, 12: Halbmotor
- 13, 14: Leistungselektronik
- 15: Rotor
- 16: Zahnstange
- 17: Fahrerassistenzsystem
- φ: Drehwinkel
- φₛₒₗₗ: Sollwinkel
- V: Fahrzeuggeschwindigkeit

## Patentansprüche

1. Steer-by-Wire-Lenksystem (1), umfassend eine Lenkhandhabe (2), ein Lenksäulenmodul (3) und ein Lenkgetriebe (4), wobei das Lenksäulenmodul (3) und das Lenkgetriebe (4) datentechnisch verbunden sind, wobei in dem Lenksäulenmodul (3) ein Drehwinkelsensor (6) und ein Aktor (7) zur Erzeugung eines Gegenmoments an der Lenkhandhabe (2) angeordnet sind, wobei
in dem Lenksäulenmodul (3) ein Lenkwinkelregler (9) angeordnet ist, wobei der Lenkwinkelregler (9) datentechnisch mit mindestens einem Fahrerassistenzsystem (17) verbunden ist, wobei der Lenkwinkelregler (9) derart ausgebildet ist, von dem mindestens einen Fahrerassistenzsystem (17) einen Sollwinkel (φₛₒₗₗ) zu empfangen und über den Aktor (7) oder einen weiteren Aktor ein Drehmoment zur Einstellung des Sollwinkels (φₛₒₗₗ) zu erzeugen, **dadurch gekennzeichnet, dass** das Lenkgetriebe (4) nur ein Signal vom Lenksäulenmodul (3) erhält, nämlich das des Drehwinkelsensors (6).

2. Steer-by-Wire-Lenksystem nach Anspruch 1, **dadurch gekennzeichnet, dass** der Lenkwinkelregler (9) derart ausgebildet ist, dass der Lenkwinkelregler (9) ein betragsmäßig begrenztes Drehmoment mittels des Aktors (7) erzeugt, das von einem Kraftfahrzeugführer überlenkt werden kann.

3. Steer-by-Wire-Lenksystem nach Anspruch 1 oder 2, **dadurch gekennzeichnet, dass** der Lenkwinkelregler (9) mit dem mindestens einen Fahrerassistenzsystem (17) über ein Bussystem verbunden ist.

4. Steer-by-Wire-Lenksystem nach einem der vorangegangenen Ansprüche, **dadurch gekennzeichnet, dass** in dem Lenksäulenmodul (3) ein Steuergerät (8) angeordnet ist, dass derart ausgebildet ist, den Aktor (7) anzusteuern.

5. Steer-by-Wire-Lenksystem nach einem der Ansprüche 2 bis 4, **dadurch gekennzeichnet, dass** das Steer-by-Wire-Lenksystem (1) derart ausgebildet ist, dass die betragsmäßige Begrenzung durch eine Nutzereingabe und/oder das mindestens eine Fahrerassistenzsystem (17) veränderbar ist.

6. Verfahren zum Betreiben eines Steer-by-Wire-Lenksystems (1), mittels einer Lenkhandhabe (2), einem Lenksäulenmodul (3) und einem Lenkgetriebe (4), wobei das Lenksäulenmodul (3) und das Lenkgetriebe (4) datentechnisch verbunden sind, wobei in dem Lenksäulenmodul (3) ein Drehwinkelsensor (6), ein Aktor (7) zur Erzeugung eines Gegenmoments an der Lenkhandhabe (2) und ein Lenkwinkelregler (9) angeordnet sind, wobei der Lenkwinkelregler (9) von mindestens einem Fahrerassistenzsystem (17) einen Sollwinkel (φₛₒₗₗ) empfängt und über den Aktor (7) oder einen weiteren Aktor ein Drehmoment zur Einstellung des Sollwinkels (φₛₒₗₗ) erzeugt, **dadurch gekennzeichnet, dass** das Lenkgetriebe (4) nur ein Signal vom Lenksäulenmodul (3) erhält, nämlich das des Drehwinkelsensors (6).

7. Verfahren nach Anspruch 6, **dadurch gekennzeichnet, dass** der Lenkwinkelregler (9) ein betragsmäßig begrenztes Drehmoment mittels des Aktors (7) erzeugt, das von einem Kraftfahrzeugführer überlenkt werden kann.

8. Verfahren nach Anspruch 6 oder 7, **dadurch gekennzeichnet, dass** das Fahrerassistenzsystem (17) über ein Bussystem an den Lenkwinkelregler (9) überträgt.

9. Verfahren nach einem der Ansprüche 6 bis 8, **dadurch gekennzeichnet, dass** der Aktor (7) mittels eines Steuergeräts (8) im Lenksäulenmodul (3) angesteuert wird.

10. Verfahren nach einem der Ansprüche 6 bis 9, **dadurch gekennzeichnet, dass** durch eine Nutzereingabe und/oder das mindestens eine Fahrerassistenzsystem (17) die betragsmäßige Begrenzung verändert wird.

## Claims

1. Steer-by-wire steering system (1), comprising a steering handle (2), a steering column module (3) and a steering gear (4), wherein the steering column module (3) and the steering gear (4) are connected for data transmission, wherein a rotary position sensor (6) and an actuator (7) for generating a counter-torque on the steering handle (2) are arranged in the steering column module (3), wherein
a steering angle controller (9) is arranged in the steering column module (3), wherein the steering angle controller (9) is connected to at least one driver assistance system (17) for data transmission, wherein the steering angle controller (9) is designed to receive a target angle (φₛₒₗₗ) from the at least one driver assistance system (17) and to generate, via the actuator or a further actuator (7), a torque for setting the target angle (φₛₒₗₗ), **characterized in that** the steering gear (4) receives only one signal from the steering column module (3), specifically that from the rotary position sensor (6).

2. Steer-by-wire steering system according to claim 1, **characterized in that** the steering angle controller (9) is designed such that the steering angle controller (9) generates a torque, which is limited in terms of amount, by means of the actuator (7), which torque can be overridden by a motor vehicle driver.

3. Steer-by-wire steering system according to claim 1 or 2,
**characterized in that** the steering angle controller (9) is connected to the at least one driver assistance system (17) via a bus system.

4. Steer-by-wire steering system according to any of the preceding claims, **characterized in that** a control device (8) is arranged in the steering column module (3), which is designed to control the actuator (7).

5. Steer-by-wire steering system according to any of claims 2 to 4, **characterized in that** the steer-by-wire steering system (1) is designed such that the amount limit can be changed by a user input and/or the at least one driver assistance system (17).

6. Method for operating a steer-by-wire steering system (1) by means of a steering handle (2), a steering column module (3) and a steering gear (4), wherein the steering column module (3) and the steering gear (4) are connected for data transmission, wherein a rotary position sensor (6), an actuator (7) for generating a counter-torque on the steering handle (2), and a steering angle controller (9) are arranged in the steering column module (3), wherein the steering angle controller (9) receives a target angle (φₛₒₗₗ) from at least one driver assistance system (17) and generates, via the actuator (7) or a further actuator, a torque for setting the target angle (φₛₒₗₗ), **characterized in that** the steering gear (4) receives only one signal from the steering column module (3), specifically that from the rotary position sensor (6).

7. Method according to claim 6, **characterized in that** the steering angle controller (9) generates a torque, which is limited in terms of amount, by means of the actuator (7), which can be overridden by a motor vehicle driver.

8. Method according to claim 6 or claim 7, **characterized in that** the driver assistance system (17) communicates with the steering angle controller (9) via a bus system.

9. Method according to any of claims 6 to 8, **characterized in that** the actuator (7) is controlled by means of a control device (8) in the steering column module (3).

10. Method according to any of claims 6 to 9, **characterized in that** the amount limit is changed by a user input and/or the at least one driver assistance system (17).

## Revendications

1. Système de direction à direction par câble (steer-by-wire) (1), comprenant une manette de direction (2), un module de colonne de direction (3) et un mécanisme de direction (4), dans lequel le module de colonne de direction (3) et le mécanisme de direction (4) sont connectés par transmission de données, dans lequel un capteur d'angle de rotation (6) et un actionneur (7) sont disposés dans le module de colonne de direction (3) pour la génération d'un couple résistant au niveau de la manette de direction (2), dans lequel
un régulateur d'angle de braquage (9) est disposé dans le module de colonne de direction (3), dans lequel le régulateur d'angle de braquage (9) est connecté par transmission de données à au moins un système d'assistance au conducteur (17), dans lequel le régulateur d'angle de braquage (9) est configuré pour recevoir un angle de consigne (φₛₒₗₗ) en provenance de l'au moins un système d'assistance au conducteur (17) et pour générer, par l'intermédiaire de l'actionneur (7) ou d'un autre actionneur, un couple de rotation pour le réglage de l'angle de consigne (φₛₒₗₗ), **caractérisé en ce que** le mécanisme de direction (4) ne reçoit qu'un signal en provenance du module de colonne de direction (3), à savoir celui du capteur d'angle de rotation (6).

2. Système de direction à direction par câble (steer-by-wire) selon la revendication 1, **caractérisé en ce que** le régulateur d'angle de braquage (9) est configuré de telle sorte que le régulateur d'angle de braquage (9) génère un couple de rotation limité en termes de valeur absolue au moyen de l'actionneur (7), lequel couple de rotation peut être surbraqué par un conducteur de véhicule automobile.

3. Système de direction à direction par câble (steer-by-wire) selon la revendication 1 ou 2, **caractérisé en ce que** le régulateur d'angle de braquage (9) est connecté à l'au moins un système d'assistance au conducteur (17) par l'intermédiaire d'un système de bus.

4. Système de direction à direction par câble (steer-by-wire) selon l'une des revendications précédentes, **caractérisé en ce qu'**un appareil de commande (8) configuré pour commander l'actionneur (7) est disposé dans le module de colonne de direction (3).

5. Système de direction à direction par câble (steer-by-wire) selon l'une des revendications 2 à 4, **caractérisé en ce que** le système de direction à direction par câble (steer-by-wire) (1) est configuré de telle sorte que la limitation en termes de valeur absolue peut être modifiée par une entrée d'utilisateur et/ou par l'au moins un système d'assistance au conducteur (17).

6. Procédé permettant de faire fonctionner un système de direction à direction par câble (steer-by-wire) (1), au moyen d'une manette de direction (2), d'un module de colonne de direction (3) et d'un mécanisme de direction (4), dans lequel le module de colonne de direction (3) et le mécanisme de direction (4) sont connectés par transmission de données, dans lequel un capteur d'angle de rotation (6), un actionneur (7) permettant de générer un couple résistant au niveau de la manette de direction (2) et un régulateur d'angle de braquage (9) sont disposés dans le module de colonne de direction (3), dans lequel le régulateur d'angle de braquage (9) reçoit un angle de consigne (φₛₒₗₗ) en provenance d'au moins un système d'assistance au conducteur (17) et génère, par l'intermédiaire de l'actionneur (7) ou d'un autre actionneur, un couple de rotation pour le réglage de l'angle de consigne (φₛₒₗₗ), **caractérisé en ce que** le mécanisme de direction (4) ne reçoit qu'un signal en provenance du module de colonne de direction (3), à savoir celui du capteur d'angle de rotation (6).

7. Procédé selon la revendication 6, **caractérisé en ce que** le régulateur d'angle de braquage (9) génère un couple de rotation limité en termes de valeur absolue au moyen de l'actionneur (7), lequel couple de rotation peut être surbraqué par un conducteur de véhicule automobile.

8. Procédé selon la revendication 6 ou 7, **caractérisé en ce que** le système d'assistance au conducteur (17) transmet au régulateur d'angle de braquage (9) par l'intermédiaire d'un système de bus.

9. Procédé selon l'une des revendications 6 à 8, **caractérisé en ce que** l'actionneur (7) est commandé au moyen d'un appareil de commande (8) dans le module de colonne de direction (3).

10. Procédé selon l'une des revendications 6 à 9, **caractérisé en ce que** la limitation en termes de valeur absolue est modifiée par une entrée d'utilisateur et/ou par l'au moins un système d'assistance au conducteur (17).
